# FASCICULE DE BREVET EUROPEEN

(11) **EP 2 551 418 B1**
(45) Date de publication et mention de la délivrance du brevet: **30.08.2017**
(21) Numéro de dépôt: 12175260.4
(22) Date de dépôt: 06.07.2012
(51) Int. Cl.: E04B 5/26, E04B 5/48, E04C 2/52, F24D 3/14

(54) **ENTREVOUS ISOLANT DE PLANCHER COMPRENANT UN RECUPERATEUR D'ENERGIE THERMIQUE D'UNE DOUCHE**
ISOLIERENDES HOHLDECKENELEMENT BEINHALTEND EINE WÄRMERÜCKGEWINNUNGSEINHEIT EINER DUSCHE
INSULATING HOLLOW FLOOR SLAB COMPRISING A DEVICE FOR RECOVERING THERMAL ENERGY FROM A SHOWER

(30) Priorité: 28.07.2011 FR 1156924
(43) Date de publication de la demande: 30.01.2013
(73) Titulaire: KP1, 84000 Avignon (FR)
(72) Inventeur: Abric, Laurent, 30150 Monfaucon (FR)
(74) Mandataire: Parzy, Benjamin Alain

(56) Documents cités:
- FR-A1- 2 503 220
- FR-A1- 2 588 592
- FR-A1- 2 798 685
- FR-A1- 2 951 754
- GB-A- 2 416 829

## Description

L'invention concerne l'intégration dans une habitation moderne d'un récupérateur de calorie destiné à être associé notamment à une douche.

### ARRIERE PLAN DE L'INVENTION

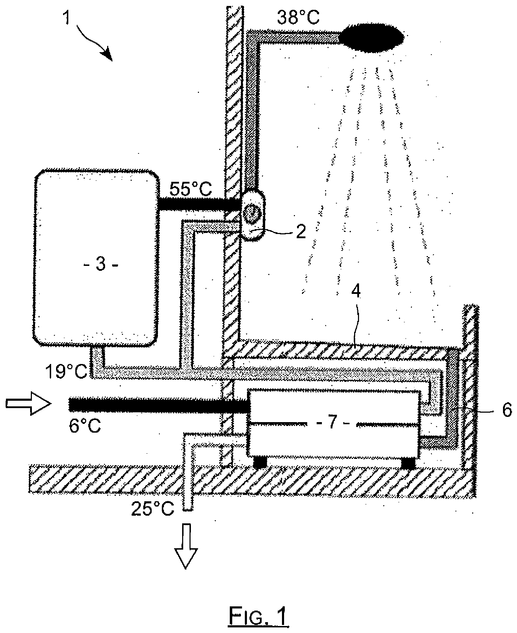

Dans une telle installation qui est représentée schématiquement en figure 1 en y étant repérée par 1, l'eau qui est délivrée dans la douche a une température de l'ordre de 38°C. Elle est issue d'un mitigeur 2 qui est lui-même connecté d'une part à un chauffe-eau 3 délivrant de l'eau chaude à 55°C environ, et d'autre part à une canalisation d'eau froide.

L'eau qui coule du pommeau de douche est collectée par un bac de douche 4 pour être récupérée dans une conduite d'évacuation 6. Dans les anciennes installations, l'eau usée qui est collectée dans la conduite 6 est ensuite évacuée directement. Mais comme cette eau est à une température de l'ordre de 35°C, une telle évacuation directe constitue une source de perte d'énergie thermique préjudiciable au bilan thermique de l'ensemble de l'habitation.

A titre d'ordre de grandeur, on considère que dans une habitation, la douche correspond sensiblement aux deux tiers de consommation d'eau chaude pour l'ensemble de l'habitation, de sorte que la perte thermique occasionnée par les douches est en fin de compte relativement importante.

Dans ces conditions, un récupérateur de chaleur tel que prévu dans l'installation de la figure 1 présente un intérêt réel du point de vue du bilan énergétique de l'habitation, considéré dans son ensemble.

Un tel échangeur qui est repéré par 7 dans la figure 1, récupère la chaleur des eaux usées issues de la douche, de manière à réchauffer l'eau froide alimentant la douche avant que cette eau froide ne parvienne au chauffe-eau et qu'elle n'alimente le mitigeur 2.

Dans l'exemple de la figure 1, l'eau froide, provenant de l'extérieur de l'habitation est à une température de 6°C, et elle est réchauffée dans le récupérateur thermique 7, qui est principalement un échangeur de chaleur, grâce aux eaux usées de la canalisation 6 qui sont à une température de l'ordre de 35°C. L'eau extérieure qui était à 6°C peut ainsi être préchauffée à une température de 19°, pendant qu'une personne prend sa douche, pour être injectée dans le chauffe-eau afin d'être réchauffée à 55°C, et pour être également injectée directement dans le mitigeur 2 de manière à constituer l'eau "froide" de cette douche.

Compte tenu du volume relativement important d'un tel échangeur de chaleur, celui-ci est installé sous le bac de douche dans l'exemple de la figure 1. Ceci implique de surélever l'ensemble de la douche, ce qui en pratique, n'est pas toujours réalisable compte tenu de la hauteur sous plafond disponible, et constitue quoi qu'il en soit une contrainte supplémentaire qui est importante.

Une telle installation comme décrite ci-dessus est connue de GB 2 416 829 A.

Ainsi, comme visible dans l'exemple de la figure 1, l'intégration d'un récupérateur de chaleur 7 constitue une contrainte importante en ce qui concerne la douche qu'il doit équiper.

Un entrevous comportant un évidement destiné à loger des composantes sanitaires telles que la tuyauterie, est connue de FR 2 588 592 A1.

### OBJET DE L'INVENTION

Le but de l'invention est de proposer une solution pour remédier à cet inconvénient.

### RESUME DE L'INVENTION

A cet effet, l'invention propose selon la revendication 1 un entrevous comportant un corps en matériau thermiquement isolant tel que du polystyrène, cet entrevous étant destiné à être installé entre deux poutrelles pour supporter le béton d'une dalle, et dans lequel le corps d'entrevous comporte un évidement dans lequel est logé un récupérateur de chaleur d'eaux usées telles que des eaux usées provenant d'une douche.

Avec cette solution décrite selon les caractéristiques de la revendication 1, le récupérateur de chaleur est directement intégré dans le plancher de l'habitation, de sorte qu'il ne constitue pas un volume supplémentaire nécessitant de surélever la douche à équiper : son intégration à l'habitation est quasiment transparente pour le concepteur et pour le constructeur de l'habitation.

L'invention concerne également un entrevous tel que défini ci-dessus, dans lequel l'évidement débouche dans une face du corps d'entrevous qui correspond à sa face supérieure lorsque cet entrevous est en place.

L'invention concerne également un entrevous tel que défini ci-dessus, dans lequel l'évidement traverse le corps principal, et comportant une portion en un matériau ayant un pouvoir d'isolation thermique supérieur à celui du matériau du corps de l'entrevous, fermant l'évidement traversant.

L'invention concerne également un entrevous tel que défini ci-dessus, comprenant un élément démontable offrant un accès à l'évidement via une face du corps d'entrevous correspondant à sa face inférieure lorsque cet entrevous est en place.

L'invention concerne également un entrevous tel que défini ci-dessus, dans lequel l'élément démontable constitue la portion ayant un pouvoir d'isolation thermique supérieur à celui du matériau du corps d'entrevous.

### BREVE DESCRIPTION DES FIGURES

La figure 1 est une vue latérale d'une installation connue comportant une douche équipée d'un récupérateur de chaleur ;
La figure 2 est une vue d'ensemble montrant l'entrevous selon l'invention en perspective ;
La figure 3 est une vue d'ensemble montrant en perspective l'entrevous selon l'invention avec le récupérateur de chaleur logé dans son évidement.

### DESCRIPTION DETAILLEE DE L'INVENTION

L'idée à la base de l'invention est d'intégrer directement le récupérateur de chaleur au plancher de l'habitation qui, dans le cas des habitations modernes comporte notamment des entrevous thermiquement isolants relativement volumineux, et pouvant donc recevoir un récupérateur de chaleur.

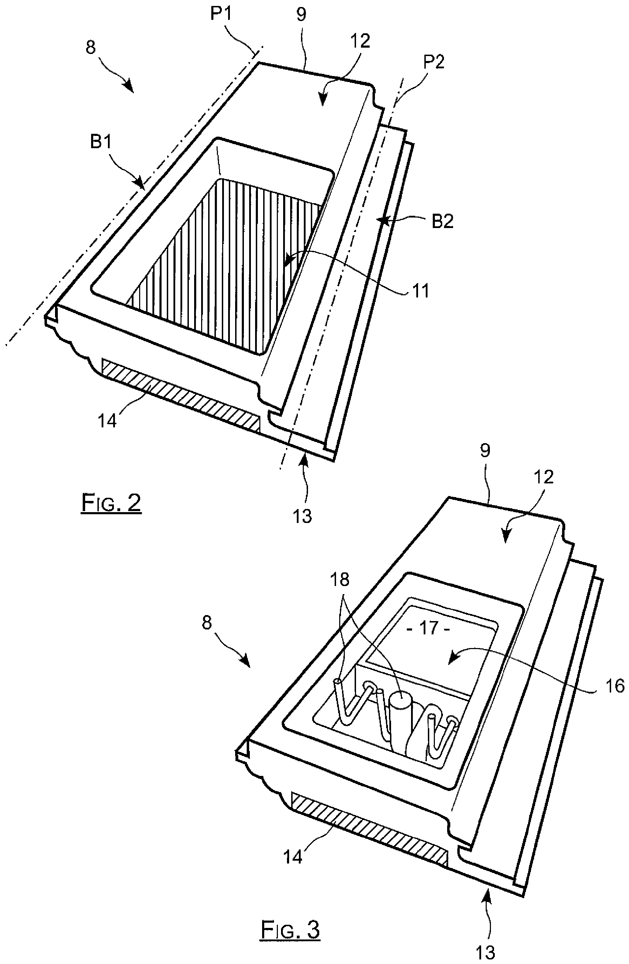

L'entrevous selon l'invention qui est représenté dans la figure 2 en y étant repéré par 8, présente une forme externe connue grâce à laquelle il s'emboîte entre deux poutrelles P1 et P2 s'étendant parallèlement l'une à l'autre. Ces deux poutrelles qui sont représentées symboliquement par leurs axes longitudinaux dans la figure 2 ont typiquement une section transversale ayant la forme de la lettre I.

Les deux bords longitudinaux de l'entrevous 8, qui sont repérés par B1 et B2, ont des profils qui sont différents mais complémentaires, de façon à permettre d'une part l'emboîtement de l'entrevous 8 entre deux poutrelles existantes, et d'autre part qu'une poutrelle située entre deux entrevous ayant de tels bords longitudinaux soit sensiblement prise en sandwich entre ces deux entrevous.

Lorsque l'ensemble est en place, deux entrevous enserrant une poutrelle définissent conjointement une face inférieure et une face supérieure planes sensiblement ininterrompues. Comme on le comprend, l'espace situé entre chaque paire de poutrelles contiguës est comblé par un ensemble d'entrevous ayant la forme extérieure de celui de la figure 2, emboîtés entre les poutrelles et accolés bout à bout, de sorte que leurs bords transversaux sont jointifs.

Dans le cas d'un plancher de vide sanitaire, ces entrevous connus sont généralement fabriqués en polystyrène, de manière à réduire les déperditions thermique de l'ensemble de l'habitation. Comme on le comprend, lorsque tous les entrevous sont en place, ils délimitent conjointement une face supérieure sensiblement plane et étanche qui permet de couler le béton d'une dalle pour constituer le plancher de vide sanitaire.

L'entrevous 8 selon l'invention qui est lui aussi destiné à être intégré à un plancher de vide sanitaire, comporte ainsi un corps principal repéré par 9 qui est fabriqué en un matériau thermiquement isolant, tel que du polystyrène.

Selon l'invention, le corps de l'entrevous comporte un évidement central, dans lequel est logé un récupérateur de chaleur des eaux usées provenant d'une douche ou autre. Cet évidement central qui est repéré par 11 dans la figure 2 a ici une forme généralement parallélépipédique, et il débouche dans une face du corps d'entrevous, repérée par 12, qui correspond à sa face supérieure lorsque cet entrevous est en place, comme dans la figure 2.

Dans l'exemple des figures 2 et 3, l'évidement 11 est un évidement qui traverse complètement le corps d'entrevous 9, depuis sa face supérieure 12, jusqu'à sa face inférieure qui est repérée par 13.

Mais l'ouverture de l'évidement 11 qui débouche dans la face inférieure 13 est fermée par un élément supplémentaire repéré par 14, ayant une forme généralement parallélépipédique.

Cet élément additionnel est avantageusement prévu amovible tout en étant fabriqué dans un matériau ayant un pouvoir d'isolation thermique très supérieur à celui du polystyrène dans lequel est fabriqué le corps de l'entrevous. Avantageusement, l'élément 14 qui a une épaisseur très faible apporte une isolation thermique de même valeur que celle apportée par le corps d'entrevous dans la région où celui-ci est plein, c'est-à-dire dans la région du corps d'entrevous qui est située à côté de l'évidement 11.

Cet élément additionnel est avantageusement prévu démontable, c'est-à-dire qu'il peut sans trop de difficulté être retiré pour donner accès à l'évidement 11, c'est-à-dire au récupérateur de chaleur de l'entrevous.

Dans ces conditions, lorsque le récupérateur de chaleur est installé et en service, il reste possible à un opérateur de s'introduire dans le vide sanitaire de l'habitation pour aller retirer l'élément additionnel pour agir sur le récupérateur de chaleur, par exemple pour le changer en cas de défaillance.

Comme illustré sur la figure 3, lorsque le récupérateur de chaleur, repéré par 16, est installé dans l'entrevous 8 selon l'invention, ce récupérateur de chaleur qui a une forme externe parallélépipédique complémentaire de celle de l'évidement 11 débouche dans la face supérieure 12 de l'entrevous.

Plus particulièrement, cet échangeur comporte un corps d'échangeur 17 relié à différents tuyaux qui débouchent sensiblement au delà de la face supérieure 12, de manière à ne pas être couverts par le béton utilisé pour couler la dalle. Ces différents tuyaux 18 peuvent ensuite facilement être connectés à un bac de douche devant être installé au dessus de l'entrevous selon l'invention, et à différentes tuyauteries supplémentaires telles que celle d'alimentation en eau froide, celle d'évacuation de l'eau provenant de la douche et dont la chaleur est récupérée.

## Revendications

1. Entrevous (8) comportant un corps (9) en matériau thermiquement isolant tel que du polystyrène, cet entrevous (8) étant destiné à être installé entre deux poutrelles (P1, P2) pour supporter le béton d'une dalle, **caractérisé en ce que** le corps d'entrevous (9) comporte un évidement (11) dans lequel est logé un récupérateur de chaleur (16) d'eaux usées telles que des eaux usées provenant d'une douche.

2. Entrevous (8) selon la revendication 1, dans lequel l'évidement (11) débouche dans une face (12) du corps d'entrevous (9) qui correspond à sa face supérieure lorsque cet entrevous (8) est en place.

3. Entrevous (8) selon la revendication 1 ou 2, dans lequel l'évidement (11) traverse le corps principal (9), et comportant une portion (14) en un matériau ayant un pouvoir d'isolation thermique supérieur à celui du matériau du corps de l'entrevous (9), fermant l'évidement traversant (11).

4. Entrevous (8) selon l'une des revendications précédentes, comprenant un élément démontable (14) offrant un accès à l'évidement via une face (13) du corps d'entrevous correspondant à sa face inférieure (13) lorsque cet entrevous (8) est en place.

5. Entrevous (8) selon les revendications 3 ou 4, dans lequel l'élément démontable (14) constitue la portion (14) en matériau ayant un pouvoir d'isolation thermique supérieur à celui du matériau du corps d'entrevous (9).

## Patentansprüche

1. Hohldeckenelement (8), umfassend einen Körper (9) aus einem wärmeisolierenden Material, wie z. B. Polystyrol, wobei dieses Hohldeckenelement (8) dazu bestimmt ist, zwischen zwei Trägern (P1, P2) zum Tragen des Betons einer Platte eingebaut zu werden, **dadurch gekennzeichnet, dass** der Hohldeckenelementkörper (9) eine Aussparung (11) umfasst, in der eine Wärmerückgewinnungseinheit (16) zur Wärmerückgewinnung aus Abwasser, wie z. B. die Abwasser, die aus einer Dusche stammen, untergebracht ist.

2. Hohldeckenelement (8) nach Anspruch 1, bei dem die Aussparung (11) in eine Seite (12) des Hohldeckenelementkörpers (9) mündet, die seiner Oberseite entspricht, wenn dieses Hohldeckenelement (8) an seinem Platz ist.

3. Hohldeckenelement (8) nach Anspruch 1 oder 2, bei dem die Aussparung (11) den Hauptkörper (9) durchsetzt und das einen Abschnitt (14) aus einem Material umfasst, das eine Wärmeisolationsfähigkeit hat, die größer als die des Materials des Körpers des Hohldeckenelements (9) ist, der die durchgehende Aussparung (11) verschließt.

4. Hohldeckenelement (8) nach einem der vorhergehenden Ansprüche, umfassend ein abnehmbares Element (14), das einen Zugang zur Aussparung über eine Fläche (13) des Hohldeckenelementkörpers bietet, die seiner Unterseite (13) entspricht, wenn dieses Hohldeckenelement (8) an seinem Platz ist.

5. Hohldeckenelement (8) nach den Ansprüchen 3 oder 4, bei dem das abnehmbare Element (14) den Abschnitt (14) aus einem Material bildet, das eine Wärmeisolationsfähigkeit hat, die größer als die des Materials des Hohldeckenelementkörpers (9) ist.

## Claims

1. Interjoist (8) including a thermally insulative material, such as polystyrene, body (9), said interjoist (8) being intended to be installed between two beams (P1, P2) to support the concrete of a slab, **characterised in that** the interjoist body (9) includes an opening (11) in which is housed a device (16) for recovering heat from waste water such as waste water from a shower.

2. Interjoist (8) according to claim 1, in which the recess (11) opens unto a face (12) of the interjoist body (9) that corresponds to its upper face when said interjoist (8) is in place.

3. Interjoist (8) according to claim 1 or 2, in which the opening (11) passes through the main body (9) and including a portion (14) closing the through-opening (11) in a material having a thermal insulation capacity greater than that of the material of the interjoist body (9).

4. Interjoist (8) according to any one of the preceding claims, including a demountable element (14) offering access to the opening via a face (13) of the interjoist body corresponding to its lower face (13) when said interjoist (8) is in place.

5. Interjoist (8) according to claim 3 or 4, in which the demountable element (14) constitutes the portion (14) in a material having a thermal insulation capacity greater than that of the material of the interjoist body (9).
